# EUROPEAN PATENT APPLICATION

(11) **EP 1 582 401 A2**
(43) Date of publication of application: **05.10.2005**
(21) Application number: 05425165.7
(22) Date of filing: 23.03.2005
(51) Int. Cl.: B60N 2/60

(54) **Seat cover for motor vehicles**

(30) Priority: 29.03.2004 IT FI20040022 U
(71) Applicant: C.A. MASI S.n.c. di Carlo e Antonio Masi, 50013 Campi Bisenzio (Firenze) (IT)
(72) Inventor: Masi, Antonio, 50142 Firenze (IT)
(74) Representative: Martini, Lazzaro

(57) **Abstract**

Seat cover for motor vehicles, with a section (2) for covering the seat plane and a section (3) for covering the back, characterized in that at least the side portions (31, 32) of said back's section (3) are made from elasticized fabric so as to result able to be fitted on backs of differently shaped seats.

## Description

The present invention has the object to provide a seat cover for motor vehicles, which cover is of variable geometry, that is, it is applicable, without tampering with, to seats of different dimensions and thus of vehicles of various makes.

It is in fact known that the seats of motor vehicles have their seat plane and, in particular, their back of dimensions and shapes which vary according to vehicle's make, so that, at present, a great number of seat covers must be provided for various motorcars.

The present invention has the object to overcome or greatly reduce this drawback.

This result has been achieved, according to the invention, by providing a seat cover having the main characteristics indicated in the claim 1.

Further characteristics being set forth in the dependent claims.

The advantages being obtained lie essentially in that it is possible to cover a plurality of seat models by the same seat cover; that it is possible to achieve a good adherence of the same seat cover to various models of seats; that by utilizing a seat cover according to the invention it is possible to cover the seats with a suitably rigid fabric in the regions not interested by the elasticized portions; that it is possible to use the seat cover for seats provided with headrest; that a seat cover made according to the present invention maintains its characteristics unchanged also after a prolonged period of time.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a front perspectic view of a seat cover according to the invention, in its most common condition of use;
- Fig. 2 is a front perspective view of an different embodiment of the seat cover of the invention;
- Fig. 3 is a front perspective view of a detail of a furhter different embodiment of the seat cover of the invention;
- Fig. 4 is a rear perspective view of the seat cover of fig.1;
- Fig. 5 is a rear perspective view of the seat cover of fig.2
- Fig. 6 is a rear perspective view of a different embodiment of the seat cover of fig.2.

Reduced to its basic structure, and reference being made to the attached pictures, a seat cover (1) for motor vehicles according to the invention comprises a section (2) intended for covering the seat plane, a section (3) intended for covering the back, and a section (4) intended for covering the headrest.

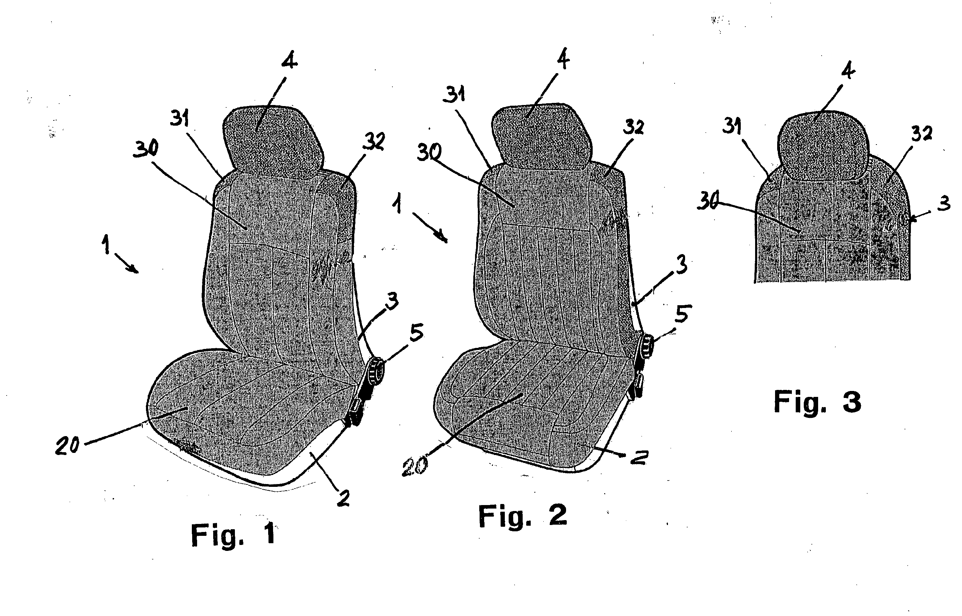

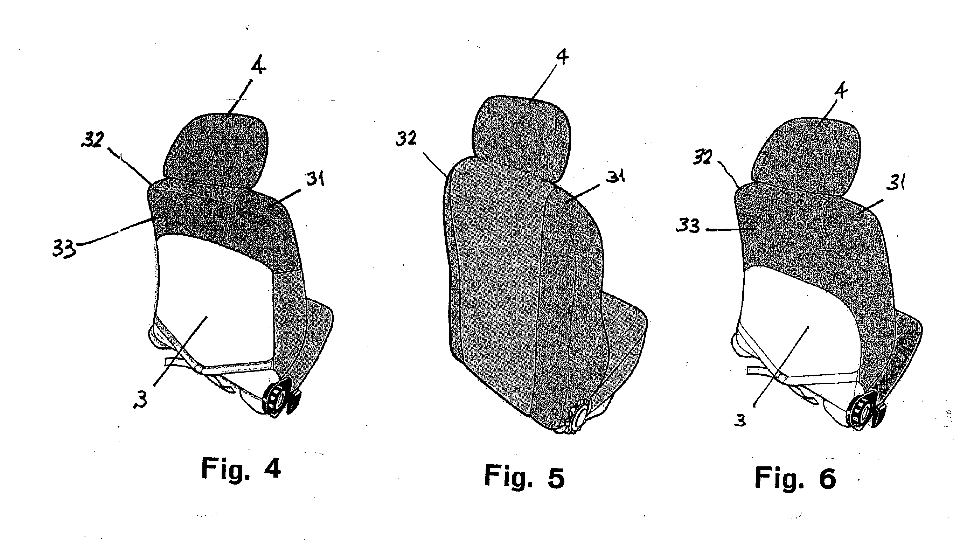

According to the present invention, at least the two upper side portions (31, 32) of the section (3) intended for covering the back are made from an elasticized fabric. Preferably:
- with reference to figures 1 and 4, portions 31 and 32 are intended for covering only the upper parts of the seat back 3;
- with reference to figures 2 and 5, portions 31, 32 and rear band 33, are intended for covering the lateral parts of the seat back 3 and a rear portion thereof extending for the whole height of the same back (3);
- with reference to figure 6, portions 31 and 32 are joined and shaped to mach rear portion 33.

Advantageously, said fabric is knitted, and is obtainable from yarns of textile fibres and rubber yarns or other elastomers - having a strength which varies depending on the quantity of elastomer yarns - by means of a circular machine, for example.

In their rear side, the said portions (31, 32) are connected by a band, possibly elasticized to thereby increasing the versatility of the seat cover in terms of general adaptability.

Advantageously, the said upper side portions (31, 32) and the said rear band (33) make up a single element.

Advantageously, besides, the section (4) of the seat cover (1) intended for covering the headrest is made from elastic fabric, likewise the side portions (31, 32) of the section which covers the back.

The median region (30) of the section (3) which covers the seat is made from an essentially rigid fabric, that is, relatively little yielding elastically.

The present invention, therefore, makes it possible to use only one seat cover for covering a remarkable number of motocars' seats of different makes and models; in fact, it has been experimentally ascertained that it is the side region of the seat, in particular the upper angular one, which varies most significantly among the various motocars' models to be covered.

The elasticity exhibited by the section (4) which covers the headrest makes it possible to increase the possibility of associating the seat cover with different models.

In this connection, figure 3 shows that the seat cover of the invention can be adapted to cover seats having a back part with rounded upper edges.

As for the section (2) covering the seat plane, this can be made from a substantially rigid fabric, that is, a fabric little yielding elastically in the central region (20) and exhibiting the two side regions (21, 22) made from elasticized fabric to fit onto seats having angled parts and for which requirements of adaptability are to be met like those described for the headrest.

Moreover, the seat cover (1) is so shaped as to allow access to the levers or knobs (5) intended for moving the seat to be covered.

The elasticized fabric and the substantially rigid fabric can be of equal or different color so as to define chromatic matchings which are particularly appreciable from an aestethic point of view.

Practically, the construction details may vary in any equivalent way as far as the shape, dimensions, elements disposition, nature of the used materials are concerned, without nevertheless departing from the scope of the innovative concept being adopted, and thereby remaining within the limits of the protection granted to the present patent for industrial utility model.

## Claims

1. Seat cover for motor vehicles, with a section (2) for covering the seat plane and a section (3) for covering the back, **characterized in that** at least the side portions (31, 32) of said back's section (3) are made from elasticized fabric so as to result able to be fitted on backs of differently shaped seats.

2. Seat cover according to claim 1 **characterized in that** the said upper side portions (31, 32) are connected to each other by a rear band of elasticized fabric (33).

3. Seat cover according to any preceeding claim, **characterized in that** the said upper side portions (31, 32) and said rear band (33) make up a single element.

4. Seat cover for motor vehicles, according to any preceeding claim, **characterized in that** it is provided with a section (4) intended for covering the headrest of the seat.

5. Seat cover for motor vehicles, according to any preceeding claim, **characterized in that** the median portion (30) of said section (3) for covering the back is made from a rigid fabric, that is, relatively little yielding elastically.

6. Seat cover according to any preceeding claim, **characterized in that** the elasticized fabric of said upper side portions (31, 32) of the back is obtainable from yarns of textile fibres and rubber yarns by means of a knitting circular machine.

7. Seat cover according to any preceeding claim, **characterized in that** the elasticized knit fabric is obtainable so that it has a strength which varies depending on the amount of rubber yarns contained therein.

8. Seat cover according to any preceeding claim, **characterized in that** it is so shaped as to allow manually operating the levers or knobs (5) for moving the back and/or the seat.

9. Seat cover according to any preceeding claim, **characterized in that** the said elasticized fabric and the substantially rigid fabric can be of equal or different color and pattern.

10. Seat cover according to any preceeding claim, **characterized in that** portions (31) and (32) are intended for covering only the upper parts of the seat back (3).

11. Seat cover according to any preceeding claim, **characterized in that** portions (31) and (32) are intended for covering the lateral parts of the seat back (3) and a rear portion thereof extending for the whole height of the same back (3).
